(19) Europäisches Patentamt
European Patent Office
Office européen des brevets

(11) Veröffentlichungsnummer: **0 502 014 B1**

# (12) EUROPÄISCHE PATENTSCHRIFT

(45) Veröffentlichungstag der Patentschrift: **01.02.95**

(51) Int. Cl.[6]: **A01N 25/30**, A01N 43/50, A01N 43/90, A01N 57/20

(21) Anmeldenummer: **90917045.8**

(22) Anmeldetag: **13.11.90**

(86) Internationale Anmeldenummer:
**PCT/EP90/01898**

(87) Internationale Veröffentlichungsnummer:
**WO 91/07089 (30.05.91 91/12)**

Die Akte enthält technische Angaben, die nach dem Eingang der Anmeldung eingereicht wurden und die nicht in dieser Patentschrift enthalten sind.

## (54) HERBIZIDE MITTEL.

(30) Priorität: **21.11.89 DE 3938564**

(43) Veröffentlichungstag der Anmeldung:
**09.09.92 Patentblatt 92/37**

(45) Bekanntmachung des Hinweises auf die Patenterteilung:
**01.02.95 Patentblatt 95/05**

(84) Benannte Vertragsstaaten:
**BE DE DK ES FR GB GR IT NL**

(56) Entgegenhaltungen:
**EP-A- 0 048 436**
**EP-A- 0 252 237**
**EP-A- 0 336 151**
**DE-C- 2 833 274**

(73) Patentinhaber: **Hoechst Schering AgrEvo GmbH**
**Gerichtstrasse 27**
**D-13342 Berlin (DE)**

(72) Erfinder: **LANGELÜDDEKE, Peter**
**Nelkenweg 5**
**D-6238 Hofheim am Taunus (DE)**
Erfinder: **KOCUR, Jean**
**Am Heiligenstock 1**
**D-6238 Hofheim am Taunus (DE)**
Erfinder: **DANNIGKEIT, Walter**
**Brüningstrasse 11**
**D-6233 Kelkheim (Taunus) (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Es ist bekannt, daß der Wirkstoff Glufosinate-ammonium (1)

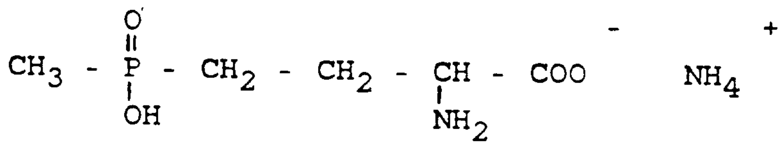
(1),

d. h. das Ammonium-Salz des 4-[Hydroxy(methyl)phosphinoyl]-DL-homoalanin,als Blattherbizid eingesetzt werden kann, und zwar beispielsweise zur nicht-selektiven Bekämpfung von Unkräutern im Obst- und Weinbau, in tropischen Plantagen-Kulturen, im Gemüsebau vor der Aussaat oder dem Verpflanzen, vor der Direktsaat von Mais oder Sojabohne, sowie auf Nichtkulturland wie Wegrändern, Industriegelände und Bahnanlagen (vgl. Z.PflKrankh.PflSchutz, Sonderheft IX, 431 - 440, 1981). Der genannte Wirkstoff enthält ein asymmetrisches C-Atom. Die Formel (1) umfaßt alle Stereo-Isomeren und deren Gemische, insbesondere das Racemat und das biologisch aktive L-Enantiomere. Das Racemat wird üblicherweise in Dosierungen ausgebracht, die zwischen 200 und 1000 Gramm je Hektar (in Form des formulierten Produktes mit 200 g a.i./l) liegen. Glufosinateammonium ist in diesen Dosierungen nur dann wirksam, wenn es über grüne Pflanzenteile aufgenommen wird. Da es im Boden mikrobiell innerhalb weniger Tage abgebaut wird, hat es keinerlei Dauerwirkung im Boden. Ähnliches gilt auch für den verwandten Wirkstoff Bialaphos (Natriumsalz des 2-L-Amino-4-[hydroxy(methyl)phosphinoyl]-butanoyl-alanylalanin) der Formel (2)

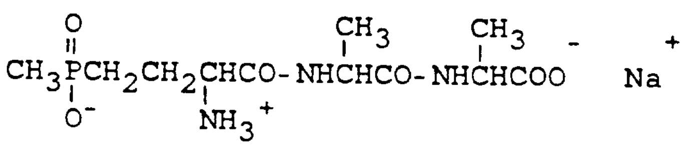
(2).

Weiterhin ist bekannt, daß der zur chemischen Gruppe der Imidazolinone gehörende Wirkstoff Imazapyr, 2-(4-Isopropyl-4-methyl-5-oxo-2-imidazolin-2-yl)-nicotinsäure in Form des Isopropylaminsalzes der

Formel (3)

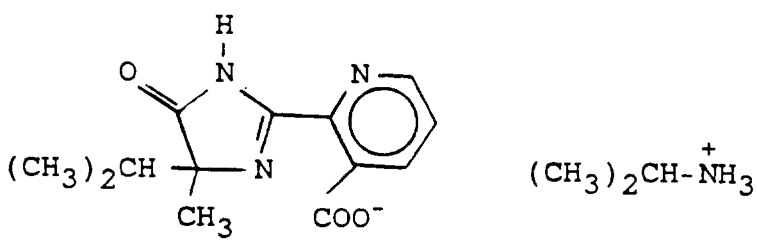
(3)

als Totalherbizid in verschiedenen Indikationen verwendbar ist (10th Internat. Congr. Plant Protection, 339 ff, 1983). Dieser Wirkstoff kann sowohl über grüne Pflanzenteile wie Blatt oder Stengel als auch über unterirdische Teile wie Wurzeln oder Rhizome von der Pflanze aufgenommen werden. Er ist dafür bekannt, daß er einerseits langsam wirkt, andererseits aber im Boden auch nur langsam abgebaut wird, so daß er folglich also lange im Boden wirksam bleibt. Üblicherweise wird er auf Nichtkulturland in Dosierungen zwischen 250 und 1000 g/ha eingesetzt. Imazapyr kann nur in Ausnahmefällen in Kulturland verwendet werden, weil die meisten Kulturpflanzen schon bei niedrigen Dosierungen, z.B. 125 g/ha, geschädigt werden.

Wirkstoffe derselben chemischen Gruppe, wie z.B.
Imazamethabenz, d.h. 6-(4-isopropyl-4-methyl-5-oxo-2-imidazolin-2-yl-m,p-toluolcarbonsäuremethylester,
Imazaquin, d.h. 2-(4,5-Dehydro-4-methyl-4-(1-methylethyl)-5-oxo-1-H-imidazol-2-yl)-3-chinolincarbonsäure,

oder
Imazethapyr, d.h. (+)-5-Ethyl-2-(4-isopropyl-4-methyl-5-oxo-2-imidazolin-2-yl)-nicotinsäure,
haben eine ähnliche Wirkungsweise, können aber in manchen Kulturen auch zur selektiven Bekämpfung von Unkräutern verwendet werden.

Wegen der besonders hohen Wasserlöslichkeit des Wirkstoffes Imazapyr (62 - 65 % nach Angaben der Hersteller-Firma) besteht insbesondere bei höheren Aufwandmengen die Gefahr der Auswaschung des Wirkstoffs nach stärkeren Regenfällen und vor allem auf leichten Böden mit geringer Sorptionskapazität.

Weiterhin ist bekannt, daß die Wirkung von Glufosinate-ammonium ebenso wie die seines L-Enantiomeren durch eine größere Anzahl von oberflächenaktiven Substanzen deutlich verbessert werden kann, vorzugsweise durch Netzmittel wie Alkyl-polyglykolethersulfate, die vorzugsweise in Form ihrer Alkali- oder Ammoniumsalze, aber auch als Magnesiumsalz verwendet werden, beispielsweise $C_{12}/C_{14}$-Fettalkohol-diglykolethersulfat-Natrium, z.B. ®Genapol LRO (vgl. EP-A-0 048 436 oder US-A-4,400,196 und EP-A 0 336 151 sowie Proc. EWRS Symp. "Factors Affecting Herbicidal Activity and Selectivity", 227 - 232 (1988)). Diese Substanz wird in den folgenden Beispielen Netzmittel A genannt.

Aus der EP-A 0 252 237 ist bekannt, daß es bei Kombinationen von Glufosinate-ammonium und Imazapyr zu Synergismus kommen kann, wobei sich aber die verwendeten Aufwandmengen im Rahmen der obengenannten Mengen-Bereiche halten.

In weitergehenden Versuchen wurde nun überraschenderweise gefunden, daß durch Zusatz eines Netzmittels des genannten Typs die für eine ausreichende Wirkung erforderliche Aufwandmenge von Imazapyr bzw. dessen Analoga oder bestimmten Glufosinate/Imazapyr-Kombinationen oder analogen Herbizidkombinationen bei Anwendung gegen verschiedene Unkräuter deutlich verringert werden kann.

Gegenstand der Erfindung sind herbizide Mittel mit einem wirksamen Gehalt an

a) einem oder mehreren Herbiziden der allgemeinen Formeln (I) und (II) oder deren Salzen

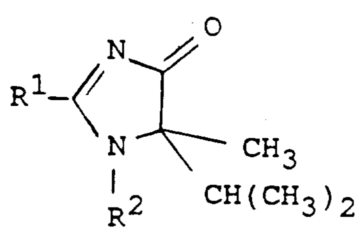

(I)

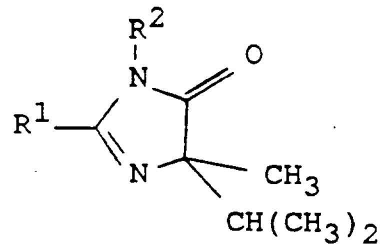

(II)

worin

$R^1$ Phenyl, Pyridyl, Chinolinyl, die alle gegebenenfalls ein- oder mehrfach durch $(C_1$-$C_4)$Alkyl, $(C_1$-$C_4)$-Alkoxy, $(C_1$-$C_4)$Halogenalkyl, $(C_1$-$C_4)$Halogenalkoxy, einen Rest der Formeln $-COOR^3$, $-COO-CHR^3-COOR^3$, $-CHR^3COO(C_1$-$C_4$-alkyl) oder $-CHR^3-COOCHR^3-COOR^3$, worin jeweils unabhängig voneinander $R^3$ = H oder $(C_1$-$C_4)$Alkyl bedeutet, oder einen Rest der Formel $-CH_2-S(O)_n-(C_1$-$C_4)$alkyl, worin n = 0, 1 oder 2 bedeutet, substituiert sind, und

$R^2$ H, einen Rest der Formeln $-CONH(C_1$-$C_4$-alkyl); $-OCO(C_1$-$C_4$-alkyl) oder $-CO(C_1$-$C_4$-alkyl)

bedeuten,

oder an einer Kombination einer oder mehrerer Verbindungen der Formeln (I) bzw. (II) mit einer oder mehreren Verbindungen der Formel (III) oder deren Salzen,

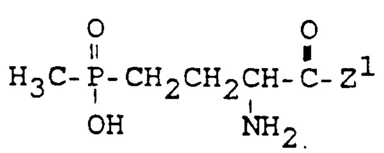

(III)

worin

$Z^1$ einen Rest der Formel -OM, $-NHCH(CH_3)CONHCH(CH_3)COOM$ oder $-NHCH(CH_3)CONHCH-[CH_2CH(CH_3)_2]COOM$, in denen M jeweils Wasserstoff oder ein anorganisches oder organisches Kation ist,

bedeutet, im Gewichtsverhältnis von 1:3 bis 1:30 der Verbindungen der Formeln (I) bzw. (II) zu Verbindungen der Formel (III),

b) anionischen Netzmitteln aus der Gruppe der $C_{10}$-$C_{18}$-Fettalkohol-polyglykolethersulfate in Form der Alkali-, Ammonium oder Erdalkalisalze oder der Ammoniumsalze, die durch Alkyl- oder Hydroxyalkylgruppen substituiert sind, und

c) gegebenenfalls üblichen inerten Zusatzstoffen.

Von besonderem Interesse sind herbizide Mittel mit einem wirksamen Gehalt an

a) einem oder mehreren Herbiziden aus der Gruppe Imazapyr, Imazaquin, Imazarethabenz und Imazethapyr sowie deren Salzen oder

einer Kombination eines oder mehrerer der Herbizide aus der Gruppe Imazapyr, Imazaquin, Imazamethabenz und Imazethapyr sowie deren Salzen mit einem oder mehreren der Herbizide aus der Gruppe Glufosinate, Bialaphos und deren Salzen im Gewichtsverhältnis 1:3 bis 1:30, vorzugsweise 1:3 bis 1:15,

b) anionischen Netzmitteln aus der Gruppe der genannnten anionischen Netzmittel und

c) inerten Zusatzstoffen.

Bevorzugt sind erfindungsgemäße herbizide Mittel, bei denen die Komponente a) Imazapyr-isopropylammonium oder eine Kombination von Glufosinate-ammonium mit Imazapyr-isopropylammonium im Gewichtsverhältnis 10:1 bis 3:1 bedeutet.

Bevorzugte anionische Netzmittel sind $C_{10}$-$C_{18}$-Fettalkoholpolyglykolethersulfat-Natriumsalze.

Die Verbindungen der Formeln (I) bis (III) sind bekannt (s. EP-A-0252237 und dort zitierte Literatur; vgl. auch "The Pesticide Manual", British Crop Protection Council, 8. Auflage, 1987). Sie umfassen auch alle Stereoisomeren inklusive der möglichen reinen Enantiomeren, und deren Gemische.

Im Falle $R^2$ = H liegen die beiden Formeln (I) und (II) im Tautomerengleichgewicht vor. In Abhängigkeit der Reste $R^2$ und der übrigen Substituenten kann daher die eine oder andere Form (I oder II) oder ein Gemisch beider Formen vorliegen, s. DE-A 3 121 636 und DE-A 2 833 274.

Die erfindungsgemäß eingesetzten Verbindungen der Formeln (I) bis (III) umfassen auch deren für die Landwirtschaft einsetzbaren Salze. Als solche kommen beispielsweise die üblichen Alkali-, Erdalkali-, substituierten oder unsubstituierten Ammonium-, Phosphonium- oder Sulfoniumsalze in Betracht. Unter den Alkalimetall- und Erdalkalimetallsalzen sind in erster Linie die Na-, K-, Mg-oder Ca-Salze zu nennen.

Ferner umfassen die Verbindungen der Formeln (III) auch Säureadditionssalze mit anorganischen Säuren wie HCl, HBr, $H_2SO_4$ oder $H_3PO_4$ oder mit organischen Säuren wie ($C_1$-$C_4$)-Carbonsäuren, chlorierten Essigsäuren, Weinsäure oder Zitronensäure.

Die erfindungsgemäßen herbiziden Mittel können sowohl als Mischformulierungen der Komponenten (Wirkstoff + Netzmittel) vorliegen, die dann in üblicher Weise mit Wasser verdünnt zur Anwendung gebracht werden, oder als sogenannte Tankmischungen durch Mischung der unformulierten oder getrennt formulierten Wirkstoffe mit dem Netzmittel und gemeinsamer Verdünnung mit Wasser hergestellt werden. Bei Bedarf kann der Spritzbrühe vor der Ausbringung noch weiteres Netzmittel zugesetzt werden.

Die herbiziden Mittel können auf verschiedene Art formuliert werden, je nachdem welche biologischen und/oder chemisch-physikalischen Parameter vorgegeben sind. Als Fomulierungsmöglichkeiten kommen beispielsweise in Frage: Spritzpulver (WP), emulgierbare Konzentrate (EC), wäßrige Lösungen (SL), Emulsionen, versprühbare Lösungen, Dispersionen auf Öl- oder Wasserbasis, Suspoemulsionen, Stäubemittel (DP), Beizmittel, Boden- bzw. Streugranulate (FG), wasserdispergierbare Granulate (WG), ULV-Formulierungen, Mikrokapseln oder Wachse.

Diese einzelnen Formulierungstypen sind im Prinzip bekannt und werden beispielsweise beschrieben in: Winnacker-Küchler, "Chemische Technologie", Band 7, C. Hauser Verlag München, 4. Aufl. 1986; van Valkenburg, "Pesticides Formulations", Marcel Dekker N.Y., 2nd Ed. 1972-73; K. Martens, "Spay Drying Handbook", 3rd Ed. 1979, G. Goodwin Ltd. London.

Bevorzugt sind Formulierungen in Form von Emulsionen, wäßrigen Lösungen, versprühbaren Lösungen, emulgierbaren Konzentraten und wasserdispergierbaren Granulaten.

Als übliche Zusatzstoffe können die erfindungsgemäßen Mittel solche enthalten, die zur Herstellung der speziellen Formulierungstypen notwendig oder vorteilhaft sind.

Bevorzugt sind übliche Zusatzstoffe für die Herstellung von wäßrigen Lösungen und Emulsionen, wie z.B. Wasser, organische Lösungsmittel und weitere anionische und nichtionischen Tenside.

Beispiele für bevorzugte Lösungsmittel sind Alkohole wie Methanol, Ethanol, Propanol, Isopropanol, n-, i-, t- und 2-Butanol. Bevorzugte Tenside sind Polyalkylenglykolmonoalkylether und -dialkylether wie Propylenglykolmonomethylether und -monoethylether, perfluoralkylgruppenhaltige Tenside wie Perfluor-($C_6$-$C_{12}$)-alkylphosphinsäuren und -phosphonsäuren und deren Alkalimetall-, Ammonium- und durch Alkylgruppen substituierte Ammoniumsalze (z.B. ®Fluowet PP, Hoechst AG).

Die erfindungsgemäßen Mittel enthalten in der Regel 10 bis 95 Gew.-% Komponenten a) und b) und 5 bis 90 Gew.-% üblicher Zusatzstoffe. Wäßrige Lösungen enthalten vorzugsweise 10 bis 40 Gew.-%, insbesondere 15 bis 30 Gew.-% Wirkstoffe der Komponente a), 10 bis 40 Gew.-%, insbesondere 25 bis 35 Gew.-% Komponente b), 30 bis 60 Gew.-% Wasser und 5 bis 30 Gew.-% üblicher Zusatzstoffe, insbesondere 5-20 Gew.-% nichtionische Tenside oder Lösungsmittel.

Die erfindungsgemäßen Mittel erfassen ein breites Unkrautspektrum. Sie eignen sich beispielsweise zur Bekämpfung von annuellen und perennierdenden Unkräutern wie beispielsweise Agropyron, Paspalum, Cynodon, Imperata, Pennisetum, Convolvulus, Cirsium, Rumex und andere.

Die erfindungsgemäßen Mittel lassen sich zur selektiven Bekämpfung von Schadpflanzen in Plantagenkulturen wie Ölpalme, Kokospalme, Gummibaum, Zitrus, Ananas, Baumwolle, Kaffee, Kakao u.a. sowie im Obst- und Weinbau einsetzen. Ebenso können die erfindungsgemäßen Kombinationen im Ackerbau im sogenannten "no till" bzw. "zero till"-Verfahren eingesetzt werden. Sie können aber auch nicht-selektiv auf Wegen, Plätzen, Industrieanlagen etc. angewendet werden, um diese Flächen von unerwünschtem Pflanzenwuchs freizuhalten.

Erfindungsgemäße herbizide Mittel ohne Gehalt an Verbindung der Formel (III) lassen sich besonders in Nichtkulturland zur Bekämpfung eines breiten Spektrums von annuellen und perennierenden Unkräutern sowie in Kautschuk- und Ölpalm-Plantagen einsetzen; hierbei kann die Aufwandmenge des Wirkstoffes der Formel (I) und/oder (II) im Vergleich zu Mitteln ohne erfindungsgemäße Komponente b) deutlich reduziert werden. Die Gefahr der Auswaschung des Wirkstoffs und damit das Risiko von Grundwasser-Kontaminationen wird ebenfalls verringert.

Erfindungsgemäße herbizide Mittel mit Gehalt an Verbindung der Formel (III) lassen sich außer in den genannten Indikationen auch im Obst- und Weinbau einschließlich Citrus-Kulturen sehr vorteilhaft einsetzen. Ein Vorteil liegt darin, daß durch den Zusatz des Netzmittels b) die Aufnahme der Wirkstoffe der Formel (I) oder (II) beschleunigt wird und daß relativ niedrige Dosierungen der Wirkstoffe (I) bzw. (II) und (III) genügen, um eine gute Wirkung zu erreichen. Außerdem wird dabei auch die Regenfestigkeit der Wirkstoffe der Formel (III) erheblich verbessert. Als besonderer Vorteil fällt hierbei ins Gewicht, daß die in den Kombinationen verwendeten und wirksamen Dosierungen von Verbindungen der Formel (I) und/oder (II) so gering sind, daß ihre Bodenwirkung erheblich reduziert ist. Somit wird deren Einsatz nicht nur in empfindlichen Kulturen erst möglich, sondern Grundwasser-Kontaminationen werden praktisch vermieden.

Durch die erfindungsgemäßen Kombination von Wirkstoffen und Netzmitteln wird eine erhebliche Reduzierung der nötigen Aufwandmenge der Wirkstoffe ermöglicht.

Gegenstand der Erfindung ist deshalb auch ein Verfahren zur Bekämpfung von unerwünschtem Pflanzenwuchs, dadurch gekennzeichnet, daß man a) ein oder mehrere Herbizide der genannten Formeln (I) und/oder (II) oder deren Salze oder eine Kombination ein oder mehrerer Verbindungen der Formel (I) und/oder (II) oder deren Salze mit ein oder mehreren Verbindungen der genannten Formel (III) oder deren Salzen, wobei in der Kombination das Gewichtsverhältnis von (I) bzw. (II) zu (III) 1:3 bis 1:30, vorzugsweise 1:3 bis 3:15 beträgt, mit

b) einem anionischen Netzmittel aus der Gruppe der $C_{10}$-$C_{18}$-Fettalkoholpolyglykolethersulfate in Form der Alkali-, Ammonium-, Erdalkali- oder alkyl- oder hydroxyalkylsubstituierten Ammoniumsalze auf die Pflanzen oder die Anbaufläche appliziert.

Die Applikation kann dabei so erfolgen, daß die Komponenten gemischt und gemeinsam ausgebracht werden oder daß die Komponenten in geeigneter getrennter oder teilweise getrennter Formulierung unmittelbar hintereinander ausgebracht werden.

Die Aufwandmenge beträgt in der Regel 10 bis 400 g/ha, vorzugsweise 25 bis 200 g/ha für die Verbindungen der Formel (I) und/oder (II) und deren Salze und 50 bis 800 g/ha, vorzugsweise 200 bis 600 g/ha für Verbindungen der Formel (III) und deren Salze.

Die Menge an Komponente b) ist in der Regel bei 500 bis 2500 g/ha, vorzugsweise 700 bis 1500 g/ha.

**Formulierungsbeispiele**

In den folgenden Beispielen bedeutet Netzmittel A $C_{12}/C_{14}$-Fettalkohol-diethylenglykolethersulfat-Natriumsalz (®Genapol LRO, Hoechst AG)

**Beispiel 1**

Zu einer Lösung von
11,50 g Imazapyr-isopropylammonium in
48,25 g Wasser

werden
30 g Netzmittel A (70 %ig in $H_2O$) und
10 g Propylenglykolmonomethylether
gegeben. Es wird so lange bei 40 °C gerührt, bis eine klare Lösung entstanden ist. Dann werden
0,25 g Fluowet PP (80 %ig in Wasser)
zugegeben und kurz nachgerührt.

**Beispiel 2**

Zu einer Lösung von
22,30 g Imazapyr-isopropylammonium in
37,45 g Wasser
werde
30 g Netzmittel A (70 %ig in Wasser) und
10 g Isopropanol
gegeben. Es wird so lange gerührt, bis eine klare Lösung entstanden ist. Dann werden
0,25 g Fluowet PP (80 %ig in Wasser)
zugegeben und kurz nachgerührt.

**Beispiel 3**

Zu einer Lösung von
18,00 g Glufosinate-ammonium und
2,25 g Imazapyr-isopropylammonium in
39,50 g Wasser
werden
30,00 g Netzmittel A (70 %ig in Wasser) und
10,00 g Propylenmonoglykolether
gegeben. Es wird so lange bei 40 °C gerührt, bis eine klare Lösung entstanden ist. Dann werden
0,25 g Fluowet PP (80 %ig)
zugegeben und kurz nachgerührt.

**Beispiel 4**

Zu einer Lösung von
18,00 g Glufosinate-ammonium und
4,50 g Imazapyr-isopropylammonium in
37,25 g Wasser
werden
30,00 g Netzmittel A (70 %ig in Wasser) und
10,00 g Propylenglykolmonomethylether sowie
0,25 g Fluowet PP (80 %ig)
gegeben und so lange gerührt, bis eine klare Lösung entstanden ist.

**Beispiel 5**

Zu einer Lösung von
9,30 g L-Glufosinate-ammonium und
2,30 g Imazapyr-isopropylammonium in
48,15 g Wasser
werden
30,00 g Netzmittel A (70 %ig in Wasser) und
10,00 g Propylenglykolmonomethylether
gegeben. Es wird so lange bei 40 °C nachgerührt, bis eine klare Lösung entstanden ist. Dann werden
0,25 g Fluowet PP (80 %ig) zugegeben und kurz nachgerührt.

## Anwendungsbeispiele

### Beispiel 6

Für einen Modellversuch wurden Erbsen in Töpfen (Durchmesser 10 cm), die mit einem Lehm-Sand-Gemisch gefüllt waren, ausgesät; anschließend wurden die Töpfe im Freien aufgestellt, bis die aufgelaufenen Pflanzen 3 bis 4 Blätter gebildet hatten. Dann wurden sie mit Imazapyr allein (in Form des Handelspräparates ®Arsenal mit 250 g a.e./l; a.e. = Säureäquivalent) oder in Mischung mit dem Netzmittel A (NM A = ®Genapol LRO flüssig mit 290 g/l "waschaktiver Substanz" = WAS, d.h. wirksamem Netzmittel) behandelt. Die Wasseraufwandmenge betrug 300 l/ha. Ein Teil der Töpfe wurde 3 bis 4 Stunden nach Behandlung einem künstlichen Regen von ca. 10 mm ausgesetzt. Die Dosierung an Netzmittel lag bei 870 g WAS/ha. Die Wirkung der Behandlung geht aus folgender Tabelle 1 hervor:

Tabelle 1

| Mittel und Aufwandmenge 1) | Wirkung in % 2) | | | |
|---|---|---|---|---|
| | unberegnet | | beregnet | |
| | 2 WnB | 4 WnB | 2 WnB | 4 WnB |
| Imazapyr | Variante A | | Variante B | |
| 31,25 | 0 | 15 | 0 | 55 |
| 62,5 | 20 | 50 | 20 | 58 |
| 125 | 30 | 53 | 35 | 70 |
| 250 | 37 | 72 | 40 | 83 |
| Imazapyr + NM A | Variante C | | Variante D | |
| 31,25 + 870 | 30 | 65 | 25 | 60 |
| 62,5 + 870 | 50 | 83 | 35 | 70 |
| 125 + 870 | 55 | 95 | 40 | 85 |
| 250 + 870 | 65 | 98 | 58 | 90 |
| NM A 870 | 0 | 0 | 0 | 0 |

1) Aufwandmenge Imazapyrin g a.e./ha
Aufwandmenge Netzmittel A in g WAS/ha
2) Wirkung in % (100 = vollständige Abtötung, 0 = kein Schaden), WnB = Wochen nach Behandlung

Die Zahlen lassen erkennen,

1. daß die Wirkung des Imazapyr nach 2 Wochen nocht nicht sehr stark, nach 4 Wochen dagegen erheblich stärker ist (Variante A);
2. daß die Imazapyr-Wirkung nach einer Beregnung (Variante B) zunimmt, was leicht dadurch erklärt werden kann, daß der vom Blatt abgewaschene Wirkstoff nun über den Boden auf die Pflanze wirkt;
3. daß bei Zusatz des Netzmittels A (Variante C) sowohl die Anfangs- wie die Endwirkung des Imazapyr erheblich zunimmt;
4. daß aber im Gegensatz zur Variante B bei der Behandlung Imazapyr + Netzmittel mit Beregnung (Variante D) die Wirkung geringer ist als in der Variante C ohne Beregnung, allerdings deutlich stärker als in Variante B oder gar in Variante A.

Daraus kann gefolgert werden, daß die Aufnahme des Wirkstoffes Imazapyr über das Blatt durch Zusatz des Netzmittels A erheblich beschleunigt wird.

### Beispiel 7

In einem Feldversuch zur Bekämpfung des ausdauernden Unkrautes Quecke (Agropyron repens) wurden Parzellen von 10 $m^2$ Größe mit Glufosinate-ammonium, Imazapyr und Netzmittel A in verschiedenen Dosierungen und erfindungsgemäßen Kombinationen behandelt, wobei die Wirkung auf die sichtbare Grünmasse im Vergleich zur unbehandelten Kontrolle bonitiert wurde (siehe Tabelle 2).

Für die Bewertung der Kombinations-Wirkung wurde die Formel von Colby verwendet:

$$E = X + Y - \frac{XY}{100}$$

wobei E die zu erwartende Wirkung (in %) aus der Kombination des Wirkstoffes X mit dem Wirkstoff Y angibt (vgl. Weeds 15, 20 -22, 1967). Diese zu erwartende Wirkung ist bei den Kombinationsbehandlungen vor der tatsächlich erzielten Wirkung in Klammern angegeben. In der Tabelle 2 bedeuten NMA = ®Genapol LRO mit 290 g/l waschaktiver Substanz, WAS (Dosierung in g WAS/ha),
GLUA = Glufosinateammonium (Dosierung in g a.i./ha) und
IMZP = Imazapyr (Dosierung in a.e/ha). In der Spalte unter X ist die Nummer der Versuche angegeben, die als Bezugsbasis für die Berechung nach Colby herangezogen wurden.

Tabelle 2

| Produkte und Dosierungen | | | | X | Wirkung in % Wochen nach Behandlung 4 | | 8 | | 12 | |
|---|---|---|---|---|---|---|---|---|---|---|
| | GLUA | IMZP | NM A | | | | | | | |
| 1. | 200 | | | | | 60 | | 0 | | 0 |
| 2. | 200 | | + 1000 | | | 75 | | 10 | | 0 |
| 3. | 400 | | | | | 85 | | 25 | | 0 |
| 4. | 400 | | + 1000 | | | 92 | | 30 | | 0 |
| 5. | 600 | | | | | 95 | | 30 | | 0 |
| 6. | 600 | | + 1000 | | | 95 | | 50 | | 0 |
| 7. | | 25 | | | | 10 | | 10 | | 0 |
| 8. | | 25 | + 1000 | | | 40 | | 30 | | 10 |
| 9. | | 50 | | | | 25 | | 45 | | 35 |
| 10. | | 50 | + 1000 | | | 45 | | 55 | | 40 |
| 11. | 200 + | 25 | | 1+7 | (64) | 70 | (10) | 20 | ( 0) | 0 |
| 12. | 200 + | 25 | + 1000 | 2+8 | (85) | 91 | (37) | 75 | (10) | 65 |
| 13. | 400 + | 25 | | 3+7 | (86,5) | 90 | (32,5) | 40 | ( 0) | 10 |
| 14. | 400 + | 25 | + 1000 | 4+8 | (95,2) | 95 | (51) | 87 | (10) | 75 |
| 15. | 600 + | 25 | | 5+7 | (95,5) | 95 | (37) | 50 | ( 0) | 15 |
| 16. | 600 + | 25 | + 1000 | 6+8 | (97) | 96 | (65) | 90 | (10) | 80 |
| 17. | 200 + | 50 | | 1+9 | (70) | 72 | (45) | 50 | (35) | 40 |
| 18. | 200 + | 50 | + 1000 | 2+10 | (86,2) | 93 | (59,5) | 85 | (40) | 78 |
| 19. | 400 + | 50 | | 3+9 | (88,7) | 96 | (58,7) | 65 | (35) | 40 |
| 20. | 400 + | 50 | + 1000 | 4+10 | (95,6) | 96 | (68,5) | 92 | (40) | 85 |
| 21. | 600 + | 50 | | 5+9 | (96,2) | 98 | (61,5) | 72 | (35) | 45 |
| 22. | 600 + | 50 | + 1000 | 6+10 | (97,2) | 99 | (77,5) | 95 | (40) | 90 |

Folgerungen, die aus diesem Versuch gezogen werden können:

1. Dosierungen von 200 bis 600 g/ha Glufosinate-ammonium führen zu relativ schneller sichtbarer Wirkung; zum Teil lagen die Bonitur-Werte 2 Wochen nach Behandlung noch höher als die in der Tabelle 2 angegebenen Werte für 4 Wochen nach Behandlung. Durch Zusatz des Netzmittels wurde die Wirkung etwas verstärkt; das läßt sich auch 8 Wochen nach Behandlung bei der Beurteilung des

Neuaufwuchses aus den überdauerenden Organen im Boden, den Rhizomen, erkennen; 4 Wochen später hat sich der Bestand jedoch vollkommen regeneriert, und es ist keinerlei Wirkung mehr erkennbar.

2. Behandlungen mit 25 oder 50 g/ha Imazapyr verursachten erwartungsgemäß nur sehr geringe Wirkung, die durch den Zusatz des Netzmittels jedoch verstärkt wurde.

3. Die Kombinationen von Glufosinate-ammonium + Imazapyr waren 4 Wochen nach Behandlung ähnlich wirksam wie Glufosinate-ammonium allein oder nur geringfügig besser. Eine deutlich bessere Wirkung, die über der zu erwartenden Wirkung lag, konnte 8 Wochen nach Behandlung beobachtet werden, sie verlor sich aber 12 Wochen nach Applikation wieder.

4. Wurden der genannten Mischung aber das Netzmittel A zugesetzt, lagen die Boniturwerte nach 8 und 12 Wochen deutlich, zum Teil weit über den Werten, die auf Grund der Wirkung der Einzelwirkstoffe nach der Colby-Formel zu erwarten gewesen wäre. Unter der Annahme, daß die Bodenwirkung der relativ geringen Imazapyr-Dosierungen unabhängig vom Netzmittel ist, kann man vermuten, daß die Aufnahme des Imazapyr über das Blatt und die Translokation zu den unterirdischen Teilen überraschenderweise durch den Netzmittel-Zusatz erheblich verstärkt wurde.

**Beispiel 8**

In einer 3 jährigen Apfel-Anlage wurden verschiedene Behandlungen im Frühjahr, Ende April in den Baumreihen ausgebracht; die vorkommenden Unkräuter waren in erster Linie verschiedene ausdauernde Gräser, sowie Disteln (Cirsium arvense), Gundermann (Glechoma hederacea) u.a. Die Wirkung auf die Unkräuter und Verträglichkeit für die Kulturpflanzen wurden in Zeitabständen festgehalten. Die Apfelbäume waren von der Spritzbrühe nicht getroffen worden (siehe Tabelle 3).

Tabelle 3

| Produkte Dosierungen in g a.i./ha, a.e./ha bzw. g WAS/ha | | | Wirkung (%) | | Schäden | |
|---|---|---|---|---|---|---|
| | | | 2* | 3* | 2* | 3* |
| Glufosinate-ammonium | Imazapyr | NM A | | | | |
| 500 | 125 | | 80 | 85 | deutliche Schäden | |
| 500 | 125 | 1000 | 95 | 98 | | |
| 500 | 50 | | 50 | 55 | keine Schäden | |
| 500 | 50 | 1000 | 90 | 85 | | |

* = Monate nach Behandlung

Die Kombinationen mit einem höheren Anteil an Imazapyr waren erwartungsgemäß besser wirksam über einen längeren Zeitraum, wobei die Variante mit Zusatz von Netzmittel noch besser abschnitt als die ohne Netzmittel. In beiden Behandlungsgliedern traten aber nach 1,5 bis 2 Monaten deutliche Schäden an den Triebspitzen der Bäume auf, die zu einem Wachstumsstillstand führten; die Symptome entsprachen normalen Imazapyr-Symptomen, wobei der Wirkstoff offensichtlich über die Wurzeln aufgenommen worden war.

Wurde die Aufwandmenge von Imazapyr reduziert, ging auch die Unkrautentwicklung so stark zurück, daß sie 2 - 3 Monate nach Behandlung nicht mehr ausreichte. Schäden traten hier dann allerdings nicht mehr auf. Dieselbe Herbizid-Kombination mit zusätzlichem Netzmittel führte zu einer wesentlich verbesserten Unkrautwirkung, die auch nach 3 Monaten noch als befriedigend zu beurteilen war. Auch hierbei traten keine Schäden an den Bäumen auf.

**Beispiel 9**

In einem Feldversuch mit Gerste als monokotyler Testpflanze wurden Parzellen mit Glufosinate-ammonium in Kombination mit sehr niedrigen Mengen von Imazapyr mit und ohne Zusatz von Netzmittel A behandelt. Die Pflanzen befanden sich zur Zeit der Behandlung in der Phase der Bestockung. Die Wasseraufwandmenge lag bei 300 l/ha. Ein Teil der Parzellen wurde 3 Stunden nach Applikation einer künstlichen Beregnung von etwa 10 mm ausgesetzt. Das Ergebnis in Form von Wirkungsbonituren zwei Wochen nach Behandlung ist in Tabelle 4 angegeben.

Tabelle 4

| Produkte, Dosierungen in g a.i./ha, bzw. g WAS/ha | | | ohne Beregnung | mit Beregnung |
|---|---|---|---|---|
| Glufosinate-ammonium | Imazapyr | Netzmittel A | | |
| 500 | 0 | 0 | 90 | 20 |
| 500 | | 1000 | 95 | 45 |
| 0 | 20 | | 0 | 0 |
| 0 | 20 | 1000 | 0 | 0 |
| 500 | 20 | 0 | 92 | 50 |
| 500 | 20 | 1000 | 95 | 85 |

Das Ergebnis zeigt, daß Glufosinate alleine oder Glufosinate plus Netzmittel gut wirksam waren, und daß bei Beregnung 3 Stunden nach Behandlung die Wirkung in beiden Varianten sehr stark abfiel, wobei der Abfall bei Netzmittelzusatz nicht ganz so ausgeprägt war. Keinesfalls reichte hier aber die Wirkung für Praxis-Bedingungen aus. Imazapyr in der geringen Menge von 20 g/ha war ohne und mit Netzmittelzusatz wirkungslos. Glufosinate-ammonium plus Imazapyr war gut wirksam, in der beregneten Parzelle dagegen war die Wirkung völlig unzureichend. Nur bei der erfindungsgemäßen Behandlung, der Kombination Glufosinate-ammonium plus Imazapyr plus Netzmittel A, war die Wirkung auch in der beregneten Parzelle so gut, daß sie unter Praxis-Verhältnissen als akzeptabel zu bezeichnen war.

Ähnliche Ergebnisse lassen sich auch erzielen, wenn man an Stelle des Glufosinate-ammoniums sein L-Enantiomeres oder aber auch den Wirkstoff Bialaphos verwendet. Ebenso läßt sich in solchen Kombinationen der Wirkstoff Imazapyr durch einen anderen Wirkstoff derselben Gruppe, z.B. Imazamethabenz, Imazaquin oder Imazethapyr ersetzen.

**Patentansprüche**

**1.** Herbzide Mittel mit einem wirksamen Gehalt an

a) einem oder mehreren Herbziden der allgemeinen Formeln (I) und (II) oder deren Salze

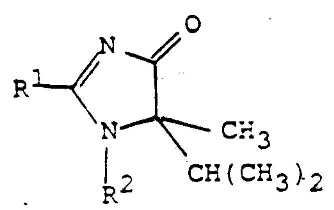

(I)

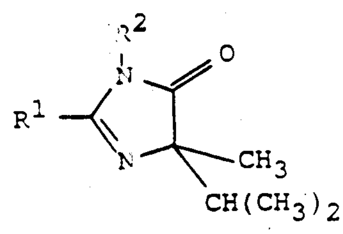

(II)

worin

$R^1$ Phenyl, Pyridyl, Chinolinyl, die alle gegebenenfalls ein mehrfach durch $(C_1\text{-}C_4)$Alkyl, $(C_1\text{-}C_4)$-Alkoxy, $(C_1\text{-}C_4)$Halogenalkyl, $(C_1\text{-}C_4)$Halogenalkoxy, einen Rest der Formeln $-COOR^3$, $-COO\text{-}CHR^3\text{-}COOR^3$, $-CHR^3\text{-}COO(C_1\text{-}C_4\text{-alkyl})$ oder $-CHR^3\text{-}COOCHR^3\text{-}COOR^3$, worin jeweils unabhängig voneinander $R^3$ = H oder $(C_1\text{-}C_4)$Alkyl bedeutet, oder einen Rest der Formel $-CH_2\text{-}S(O)_n\text{-}(C_1\text{-}C_4)$alkyl, worin n = 0, 1 oder 2 bedeutet, substituiert sind, und

$R^2$ H, einen Rest der Formeln $-CONH(C_1\text{-}C_4\text{-alkyl})$; $-OCO(C_1\text{-}C_4\text{-alkyl})$ oder $-CO(C_1\text{-}C_4\text{-alkyl})$

bedeuten,

oder an einer Kombination einer oder mehrerer Verbindungen der Formeln (I) bzw. (II) mit einer oder mehreren Verbindungen der Formel (III) oder deren Salzen,

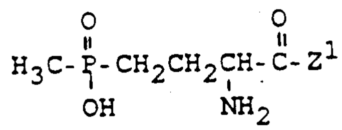 (III)

worin

$Z^1$ einen Rest der Formel -OM, $-NHCH(CH_3)CONHCH(CH_3)COOM$ oder $-NHCH(CH_3)-CONHCH[CH_2CH(CH_3)_2]COOM$, in denen M jeweils Wasserstoff oder ein anorganisches oder organisches Kation ist,

bedeutet, im Gewichtsverhältnis von 1:3 bis 1:30 der Verbindungen der Formel (I) bzw. (II) zu Verbindungen der Formel (III),

b) anionischen Netzmitteln aus der Gruppe der $C_{10}$-$C_{18}$-Fettalkohol-polyglykolethersulfate in Form der Alkali-, Ammonium- oder Erdalkalisalze oder der Ammoniumsalze, die durch Alkyl- oder Hydroxyalkylgruppen substituiert sind, und

c) gegebenenfalls üblichen inerten Zusatzstoffen.

**2.** Herbizide Mittel nach Anspruch 1, dadurch gekennzeichnet, daß sie einen wirksamen Gehalt an

a) einem oder mehreren Herbiziden aus der Gruppe Imazapyr, Imazaquin, Imazamethabenz und Imazethapyr sowie deren Salzen oder

einer Kombination eines oder mehrerer der Herbizide aus der Gruppe Imazapyr, Imazaquin, Imazamethabenz und Imazethapyr sowie deren Salzen mit einem oder mehreren der Herbizide aus der Gruppe Glufosinate, Bialaphos und deren Salzen im Gewichtsverhältnis 1:3 bis 1:30, vorzugsweise 1:3 bis 1:15,

b) anionischen Netzmitteln aus der Gruppe der genannnten anionischen Netzmittel und

c) inerten Zusatzstoffen.

**3.** Herbizide Mittel nach Anspruch 1 oder 2, dadurch gekennzeichnet, daß die Komponente a) Imazapyr-isopropylammonium oder eine Kombination von Glufosinate-ammonium mit Imazapyr-isopropylammonium im Gewichtsverhältnis 10:1 bis 3:1 bedeutet.

**4.** Herbizide Mittel nach einem oder mehreren der Ansprüche 1 bis 3, dadurch gekennzeichnet, daß die Komponente b ein $C_{10}$-$C_{18}$-Fettalkoholpolyglykolethersulfat-Natriumsalz ist.

**5.** Verfahren zur Bekämpfung von unerwünschtem Pflanzenwuchs, dadurch gekennzeichnet, daß man

a) ein oder mehrere Herbizide der genannten Formeln (I) und (II) oder deren Salze oder eine Kombination ein oder mehrerer Verbindungen der Formel (I) bzw. (II) oder deren Salze mit ein oder mehreren Verbindungen der genannten Formel (III) oder deren Salze, wobei in der Kombination das Gewichtsverhältnis von (I) bzw. (II) zu (III) 1:3 bis 1:30, vorzugsweise 1:3 bis 3:15 beträgt, mit

b) einem anionischen Netzmittel aus der Gruppe der $C_{10}$-$C_{18}$-Fettalkoholpolyglykolethersulfate in Form der Alkali-, Ammonium-, Erdalkali- oder alkyl- oder hydroxyalkylsubstituierten Ammoniumsalze auf die Pflanzen oder die Anbaufläche appliziert.

**6.** Verfahren nach Anspruch 5, dadurch gekennzeichnet, daß die Aufwandmenge von Verbindungen der Formel (I) bzw. (II) oder deren Salzen 10 bis 400 g/ha, vorzugsweise 25-200 g/ha beträgt.

**7.** Verfahren nach Anspruch 5 oder 6, dadurch gekennzeichnet, daß die Aufwandmenge für die Verbindungen der Formel (III) 50 bis 800 g/ha, vorzugsweise 200 bis 600 g/ha beträgt.

**8.** Verfahren nach einem oder mehreren der Ansprüche 5 bis 7, dadurch gekennzeichnet daß die Aufwandmenge für die Komponente b) 500 bis 2500 g/ha, vorzugsweise 700 bis 1500 g/ha beträgt.

## Claims

**1.** A herbicidal agent with an effective content of

a) one or more herbicides of the formulae (I) and (II) or salts thereof

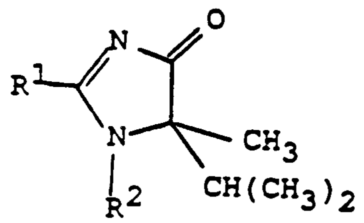

(I)

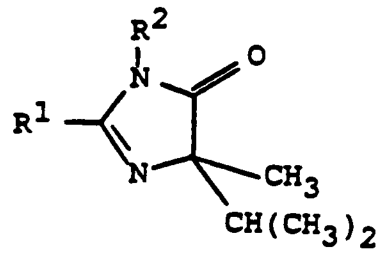

(II)

where

$R^1$ is phenyl, pyridyl or quinolinyl, each of which is optionally monosubstituted or polysubstituted by $(C_1\text{-}C_4)$alkyl, $(C_1\text{-}C_4)$alkoxy, $(C_1\text{-}C_4)$haloalkyl, $(C_1\text{-}C_4)$haloalkoxy, a radical of the formulae $-COOR^3$, $-COO\text{-}CHR^3\text{-}COOR^3$, $-CHR^3\text{-}COO(C_1\text{-}C_4\text{-alkyl})$ or $-CHR^3\text{-}COOCHR^3\text{-}COOR^3$, where in each case independently of one another $R^3$ radicals are H or $(C_1\text{-}C_4)$-alkyl,

or by a radical of the formula $-CH_2\text{-}S(O)_n\text{-}(C_1\text{-}C_4)$-alkyl where n is 0, 1 or 2, and

$R^2$ is H, or a radical of the formula $-CONH(C_1\text{-}C_4\text{-alkyl})$; $-OCO(C_1\text{-}C_4\text{-alkyl})$ or $-CO(C_1\text{-}C_4\text{-alkyl})$,

or a combination of one or more compounds of the formula (I) or (II) with one or more compounds of the formula (III) or salts thereof,

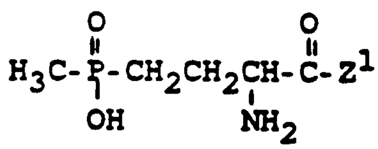

(III)

where

$Z^1$ is a radical of the formula -OM, $-NHCH(CH_3)CONHCH(CH_3)COOM$ or $-NHCH(CH_3)\text{-}CONHCH[CH_2CH(CH_3)_2]COOM$ in which M in each case is hydrogen or an inorganic or organic cation,

in a ratio by weight of 1:3 to 1:30 of the compounds of the formula (I) or (II) to compounds of the formula (III),

b) anionic wetting agents from the group of the $C_{10}\text{-}C_{18}$-fatty alcohol polyglycol ether sulfates in the form of the alkali metal salts, ammonium salts or alkaline earth metal salts or of the ammonium salts which are substituted by alkyl or hydroxyalkyl groups, and

c) if appropriate, customary inert additives.

**2.** A herbicidal agent as claimed in claim 1, which has an effective content of

a) one or more herbicides selected from the group comprising imazapyr, imazaquin, imazamethabenz and imazethapyr and the salts thereof, or

a combination of one or more of the herbicides selected from the group comprising imazapyr, imazaquin, imazamethabenz and imazethapyr, and the salts thereof, with one or more of the herbicides selected from the group comprising glufosinate and bialaphos, and the salts thereof, in a ratio by weight of 1:3 to 1:30, preferably 1:3 to 1:15,

b) anionic wetting agents selected from the group of the anionic wetting agents mentioned, and

c) inert additives.

**3.** A herbicidal agent as claimed in claim 1 or 2, in which the component a) is imazapyr-isopropylammonium or a combination of glufosinate-ammonium with imazapyr-isopropylammonium in a ratio by weight of 10:1 to 3:1.

**4.** A herbicidal agent as claimed in one or more of claims 1 to 3, in which the component b) is a sodium salt of $C_{10}$-$C_{18}$-fatty alcohol polyglycol ether sulfate.

**5.** A method of controlling undesired plant growth, which comprises applying, to the plants or the area under cultivation,

a) one or more herbicides of the mentioned formulae (I) and (II), or salts thereof, or a combination of one or more compounds of the formula (I) and/or (II), or salts thereof, with one or more compounds of the mentioned formula (III) or salts thereof, the ratio by weight of (I) or (II) to (III) in the combination being 1:3 to 1:30, preferably 1:3 to 3:15, together with

b) an anionic wetting agent selected from the group of the $C_{10}$-$C_{18}$-fatty alcohol polyglycol ether sulfates in the form of the alkali metal salts, ammonium salts, alkaline earth metal salts or alkyl- or hydroxy-alkyl-substituted ammonium salts.

**6.** The method as claimed in claim 5, wherein the application rate of compounds of the formula (I) or (II), or salts thereof, is 10 to 400 g/ha, preferably 25-200 g/ha.

**7.** The method as claimed in claim 5 or 6, wherein the application rate of compounds of the formula (III) is 50 to 800 g/ha, preferably 200 to 600 g/ha.

**8.** The method as claimed in one or more of claims 5 to 7, wherein the application rate of component b) is 500 to 2500 g/ha, preferably 700 to 1500 g/ha.

**Revendications**

**1.** Agent herbicide comportant une teneur active en :

a) un ou plusieurs herbicides répondant aux formules générales (I) et (II) ou leurs sels :

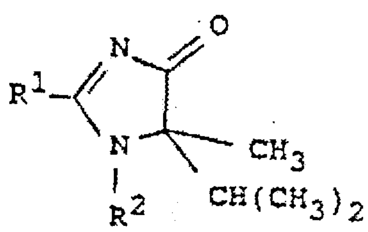

(I)

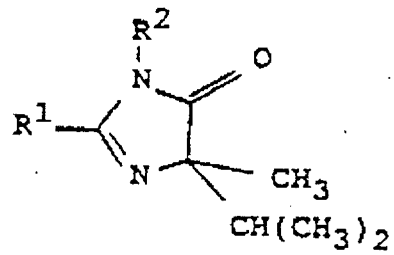

(II)

(formules dans lesquelles

$R^1$ représente un groupe phényle, pyridyle, quinazolinyle, qui peuvent tous éventuellement être substitués une ou plusieurs fois par un reste alkyle en $C_1$ à C4, halogénoalkyle en $C_1$ à $C_4$, halogéno alcoxy en $C_1$ à C4, un reste répondant aux formules $-COOR^3$, $-COO-CHR^3-COOR^3$, $-CHR^3-COO$(alkyle en $C_1$ à $C_4$) ou $-CHR^3$ $-COOCHR^3-COOR^3$, où chaque fois, indépendamment l'un de l'autre, le symbole $R^3$ peut représenter H ou un groupe alkyle en $C_1$ à $C_4$; ou par un reste de formule $-CH_2-S(O)_n-$ alkyle en $C_1$ à $C_4$, formule dans alquelle n vaut 0, 1 ou 2;

et

$R^2$ représente H, un reste répondant aux formules - CONH(alkyle en $C_1$ à $C_4$), -OCO(alkyle en $C_1$ à $C_4$) ou - CO(alkyle en $C_1$ à $C_4$),

ou une combinaison d'un ou plusieurs composés répondant aux formules (I) ou (II) avec un ou plusieurs composés répondant à la formule (III) ou ses sels :

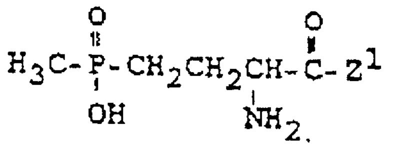 (III)

dans laquelle

$Z^1$ représente un reste de formule -OM, $-NHCH(CH_3)=CONHCH(CH_3)COOM$ ou $NHCH(CH_3)-CONHCH[CH_2CH_2(CH_3)_2]COOM$, formules dans lesquelles M représente chaque fois un atome d'hydrogène ou un cation minéral ou organique, selon un rapport pondéral de 1:3 à 1:30 des composés de formules (I) ou (II) aux composés de formule (III),

b) des mouillants anioniques choisis dans l'ensemble constitué par des (alcools gras en $C_{10}$ à $C_{18}$)-(étherpolyglycolique)-sulfate sous forme de sels alcalins, d'ammonium ou de sels alcalino-terreux ou des sels d'ammoniums qui sont substitués par des groupes alkyles ou par des groupes hydroxy alkyles, et

c) éventuellement des additifs inertes usuels.

**2.** Agent herbicide selon la revendication 1 caractérisé en ce qu'il comporte une teneur active en :

a) un ou plusieurs herbicides choisis dans l'ensemble constitué par "imazapyr", "imazaquine", "imazaméthabenz" et "imazéthapyr", ainsi que leurs sels ou une combinaison d'un ou plusieurs herbicides du groupe imazapyr, imazaquine, imazaméthabenz ou imazéthapyr, ainsi que leurs sels, avec un ou plusieurs herbicides choisis dans l'ensemble formé par du glufosinate, du bialaphos et leurs sels, selon un rapport pondéral de 1:3 à 1:30, avantageusmeent 1:3 à 1:15,

b) des mouillants anioniques choisis dans l'ensemble formé par les mouillants cités, et

c) des additifs inertes.

**3.** Agent herbicide selon la revendication, 1 ou 2, caractérisé en ce que le constituant (a) désigne "imazapyr"isopropylammonium" ou une combinaison de glufosinate-ammonium avec imazapyr-isopropylammonium, selon un rapport pondéral de 10:1 à 3:1.

**4.** Agent herbicide selon une ou plusieurs des revendications 1 à 3, caractérisé en ce que le constituant (b) est un sel de sodium d'un composé de type (alcool gras en $C_{10}$-$C_{18}$)-(éther polyglycolique)-sulfate.

**5.** Procédé pour combattre une croissance de plantes que l'on ne souhaite pas, procédé caractérisé en ce que l'on applique sur les plantes ou sur les surfaces de culture :

a) un ou plusieurs herbicides répondant aux formules citées (I) et (II) ou leurs sels, ou une combinaison d'un ou plusieurs d'un ou plusieurs composés de formule (I) ou (II) ou leurs sels avec un ou plusieurs composés répondant à la formule citée (III) ou leurs sels, et, dans la combinaison, le rapport pondéral entre (I) ou (II) et (III) vaut de 1:3 à 1:30, avantageusmeent de 1:3 à 3:15,

avec

b) un mouillant anionique choisi dans l'ensemble constitué par de l'alcool gras (en $C_{10}$ à $C_{18}$)-(éther polyglycolique)-sulfate sous forme des sels alcalins, d'ammonium, alcalino-terreux ou des sels d'ammonium à substituant alkyle ou hydroxy alkyle.

**6.** Procédé selon la revendication 5, caractérisé en ce que la quantité des composés de formule (I) ou (II) ou de leurs sels que l'on applique est de 10 à 400/hectare, avantageusement de 25 à 200 g/hectare.

**7.** Procédé selon la revendication 5 ou 6, caractérisé en ce que la quantitié appliquée pour les composés de formule (III) est de 50 à 800 g par hectare, avantageusement de 200 à 600 g par hectare.

**8.** Procédé selon une ou plusieurs des revendications,1 à 7, caracterisé en ce que la quantité appliquée pour le constituant (b) est de 500 à 2500 g/hectare, avantageusement de 700 à 1500 g/hectare.